# EUROPÄISCHE PATENTSCHRIFT

(11) **EP 3 793 802 B1**
(45) Veröffentlichungstag und Bekanntmachung des Hinweises auf die Patenterteilung: **28.09.2022**
(21) Anmeldenummer: 19732330.6
(22) Anmeldetag: 18.06.2019
(51) Int. Cl.: B29C 49/42, B29C 49/06, B29L 31/00

(54) **SORTIEREINRICHTUNG UND ZUFÜHRSCHIENE FÜR KUNSTSTOFFVORFORMLINGE**
SORTING DEVICE AND FEED RAIL FOR PLASTIC PREFORMS
DISPOSITIF DE TRI ET RAIL D'ALIMENTATION POUR PRÉFORMES EN MATIÈRE PLASTIQUE

(30) Priorität: 11.07.2018 DE 102018116841
(43) Veröffentlichungstag der Anmeldung: 24.03.2021
(73) Patentinhaber: Krones AG, 93073 Neutraubling (DE)
(72) Erfinder: SCHRÖTER, Carsten, 93073 Neutraubling (DE); BEUTL, Jürgen, 93073 Neutraubling (DE); WÜNSCHE, Dieter, 93073 Neutraubling (DE)
(74) Vertreter: Bittner, Bernhard
(86) Internationale Anmeldenummer: PCT/EP2019/066081
(87) Internationale Veröffentlichungsnummer: WO 2020/011497

(56) Entgegenhaltungen:
- EP-A1- 2 604 411
- DE-A1-102009 016 593
- DE-U1- 20 308 513
- US-A1- 2003 164 280
- US-A1- 2008 196 998

## Beschreibung

Die vorliegende Erfindung bezieht sich auf eine Vorrichtung zum Herstellen von Kunststoffbehältnissen. Dabei ist es bekannt, dass zunächst sogenannte Kunststoffvorformlinge erwärmt werden und anschließend in einem erwärmten Zustand zu Kunststoffbehältnissen umgeformt werden. Dabei werden üblicherweise Kunststoffvorformlinge, beispielsweise ausgehend von einer losen Schüttung, zunächst sortiert und anschließend in einem sortierten Zustand einer Erwärmungseinrichtung zugeführt. Im Stand der Technik finden dabei Preformzuführschienen Anwendung, welche das verbleibende Element zwischen beispielsweise einer Sortiereinrichtung, wie einem Rollensortierer, und einer Blasmaschine, beispielsweise dem Ofen der Blasmaschine, darstellen. Die Dokumente EP2604411A1, US2003/164280A1, US2008/196998A1 und DE102009016593A1 beschreiben gattungsgemäße Vorrichtungen und Verfahren aus dem Stand der Technik.

Im Stand der Technik ist es daher bekannt, dass mittels einer Maschine auch unterschiedliche Kunststoffvorformlinge verarbeitet werden sollen. Entsprechend der zu verarbeitenden Kunststoffvorformlinge müssen der Abstand beispielsweise der Tragleisten dieser Transporteinrichtungen, die Höhe eines eventuellen Niederhalters und, falls vorhanden, die Öffnungsweiten einer Führung für die Kunststoffvorformlinge eingestellt werden. Diese Einstellung oder Verstellung erfolgt dabei im Stand der Technik mit manuell zu bedienenden Verstelleinheiten. Zum Teil sind hierbei pro Befestigungs- oder Aufhängepunkt dieser genannten Elemente Verstelleinheiten bzw. einzelne Verstelleinheiten eingesetzt. In einer Zuführschiene können bis zu 21 Stelleinheiten verbaut sein.

An einer aus dem internen Stand der Technik der Anmelderin bekannten Zuführschiene müssen die im Stand der Technik beschriebenen Verstelleinheiten einzeln manuell auf die erforderlichen Werte eingestellt werden. Bei einer voll ausgerüsteten Zuführschiene sind manuelle Einstellarbeiten an bis zu 21 Stelleinheiten teilweise sogar in mehreren Schritten erforderlich. Dies ist sehr zeitaufwändig, und zudem erfordern die Einstellungen eine hohe Sorgfalt, um einen zuverlässigen Betrieb sicherzustellen. Wegen der dezentralen Anordnung der Verstelleinheiten entlang der Zuführschiene ist auch deren einfache Erreichbarkeit nicht immer gegeben. Teilweise kann zwar am Boden stehend gearbeitet werden, teilweise ist jedoch eine auch mehrstufige Leiter erforderlich und teilweise muss man sich auch über ein Geländer beispielsweise einer Bühne eines Rollensortierers beugen, um die Einheiten zu erreichen. Hierdurch entstehen zusätzliche Unfallrisiken.

Daneben erfolgt durch einen Rollensortierer nach dem Stand der Technik das Ausrichten und Aufreihen der Kunststoffvorformlinge aus einem losen Schüttgut zu einer regelmäßigen Anordnung. Anschließend werden die ausgerichteten Kunststoffvorformlinge über die Auslaufgarnitur und die Zuführschiene einer Blasmaschine zugeführt. Bei den Rollensortierern müssen ein Rollenabstand und beispielsweise auch ein Kickerrad oder eine Führungszunge für jede Geometrie der Kunststoffvorformlinge spezifisch festgelegt und eingestellt werden.

Im Stand der Technik werden diese Einstellungen manuell vorgenommen. Aus dem internen Stand der Technik ist ein Rollensortierer bekannt, bei dem die Verstellung eines Rollenabstands zueinander einseitig erfolgt, das heißt, dass nur eine dieser Rollen bewegt wird, was beispielsweise mittels eines Handrads und eines Zählwerks erfolgen kann. Eine mechanische Bewegung eines Stellrads wird hier beispielsweise über eine Königswelle auf Trapezspindeln von Lineareinheiten übertragen. Insbesondere bei Maschinen mit mehreren Kunststoffvorformlingen führen die manuellen Einstelltätigkeiten zu inkorrekten Werten, die das Wiederanlaufverhalten und die Produktion nach einem Umstellvorgang negativ beinflussen. Daneben beanspruchen die Umstelltätigkeiten Arbeitszeit.

Der vorliegenden Erfindung liegt daher die Aufgabe zugrunde, derartige Umrichtungen einer entsprechenden Vorrichtung zu vereinfachen und bevorzugt auch höher zu präzisieren. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Transportieren von Kunststoffvorformlingen weist eine Sortiereinrichtung auf, welche zum Sortieren von Kunststoffvorformlingen geeignet und bestimmt ist und welche die Kunststoffvorformlinge in einer vorgegebenen Transportrichtung transportiert. Weiterhin ist eine in der Transportrichtung nach der Sortiereinrichtung angeordnete Transporteinrichtung vorgesehen, wobei diese Transporteinrichtung eine erste Trägerschiene zum Tragen der Kunststoffvorformlinge und eine zweite Trägerschiene zum Tragen der Kunststoffvorformlinge aufweist und die Kunststoffvorformlinge zwischen dieser ersten Trägerschiene und der zweiten Trägerschiene transportierbar sind. Dabei erstrecken sich diese Trägerschienen entlang der Transportrichtung, wobei die Sortiereinrichtung zwei zueinander beabstandete Rollen aufweist, zwischen denen die Kunststoffvorformlinge führbar sind.

Erfindungsgemäß weist die Vorrichtung einen Verstellmechanismus zum Verstellen zumindest eines seitlichen Abstands dieser Trägerschienen auf, wobei dieser Verstellmechanismus mehrere Verstelleinheiten aufweist, welche entlang der Transportrichtung hintereinander angeordnet sind, wobei diese Verstelleinheiten jeweils eine Verstellung des seitlichen Abstands ermöglichen und wobei diese Verstelleinheiten miteinander insbesondere mechanisch derart gekoppelt sind, dass die Verstelleinheiten gemeinsam verstellbar sind. Auf diese Weise ist es möglich zentral beispielsweise den Abstand dieser beiden Trägerschienen zu verändern. Auf diese Weise ist eine Umstellung der Vorrichtung auf unterschiedliche Kunststoffvorformlinge möglich. Dabei ist es beispielsweise möglich, dass dieser Verstellmechanismus einen Spindelantrieb oder eine Zahnstange oder auch ähnliche mechanische Elemente aufweist.

Es wäre jedoch auch denkbar, dass jede der Verstelleinheiten über einen eigenen Antrieb verfügt und diese Antriebe miteinander gemeinsam gesteuert sind. Auf diese Weise bestünde zwischen den Antrieben und damit auch zwischen den Verstelleinheiten eine steuerungsseitige Kopplung.

Bei einer weiteren vorteilhaften Ausführungsform sind die Verstelleinheiten mittels wenigstens einer mechanischen Kopplungseinrichtung miteinander gekoppelt.

Bei einer weiteren vorteilhaften Ausführungsform weist die Kopplungseinrichtung wenigstens einen drehbaren oder entlang seiner Längsrichtung verschiebbaren stangenartigen Körper auf. Vorteilhaft handelt es sich hierbei um Kopplungsstangen, welche drehbar sind und welche vorteilhaft auf die einzelnen Verstelleinheiten, beispielsweise über Verzahnungen einwirken können. Auf diese Weise können beispielsweise durch eine zentrale Verstelleinheit bzw. eine zentrale Verstelleinrichtung mehrere Verstelleinheiten gleichzeitig und in der gleichen Weise geändert werden. Bevorzugt können dabei diese Verstelleinheiten Zahnradmechanismen aufweisen, die durch eine zentrale Welle antreibbar sind. Dieser Zahnradmechanismus kann beispielsweise ein Kegelzahnrad aufweisen.

Bei einer weiteren vorteilhaften Ausführungsform weist die Vorrichtung eine Antriebseinrichtung zum Antreiben der Verstelleinheiten auf. So können beispielsweise einer oder gegebenenfalls auch mehrere zentrale Motoren vorgesehen sein, welche die Verstellung an mehreren Verstelleinheiten bewirken können.

Es wird damit vorgeschlagen, dass die einzelnen Verstelleinheiten einer Kunststoffvorformlingszuführungsschiene durch eine zentrale Verstellung abgelöst werden. Dabei können beispielsweise an den Aufhängepunkten der Tragleisten, eines Niederhalters oder gegebenenfalls auch einer Führung der Kunststoffvorformlinge mechanische Verstelleinheiten verbaut werden, die bevorzugt untereinander gekoppelt sind und dann von einem zentralen Punkt verstellt werden können. Die mechanischen Verstelleinheiten sind bevorzugt als Lineareinheiten ausgebildet, die Verstellung erfolgt besonders bevorzugt mechanisch, beispielsweise über einen Spindelantrieb. Andere Bauformen, wie zum Beispiel Zahnstangen oder dergleichen, sind ebenfalls denkbar.

Die Kopplung der Verstelleinheiten kann dabei je Funktionselement (Tragleiste, Niederhalter oder Führungseinrichtung) mechanisch etwa mit einer durchgehenden Welle zu erfolgen.

So kann erreicht werden, dass etwa maximal fünf Verstelleinheiten an einem gut zu erreichenden Punkt einer Zuführschiene eingestellt werden. Dieser Punkt kann dabei beispielsweise an einem oberen oder unteren Ende der Schiene liegen.

Zusätzlich kann eine zentrale elektromotorische Verstellung, beispielsweise an zwei, drei, vier oder fünf Punkten vorgesehen sein. Optional wäre es auch denkbar, dezentral angeordnete kompakte elektromotorische Verstelleinheiten vorzusehen, deren Kopplung und Synchronisation bevorzugt über eine Anlagensteuerung erfolgt.

Durch die hier vorgeschlagene Vorgehensweise kann eine signifikante Verringerung des zeitlichen Aufwands zur manuellen Einstellung durch eine Zusammenfassung der Verstelleinheiten (beispielsweise von maximal 25 Stück auf 5 Stück erfolgen). Damit besteht weiterhin die Möglichkeit einer optionalen automatischen Einstellung.

Bei einer weiteren vorteilhaften Ausführungsform weist die Transporteinrichtung ein Niederhalterelement auf, welches sich wenigstens abschnittsweise entlang der Transportrichtung erstreckt und welches bevorzugt ebenfalls durch den Verstellmechanismus verstellbar ist. Auch hier wäre es wiederum möglich, dass mehrere Verstelleinheiten auf dieses Niederhalterelement einwirken und diese Verstelleinheiten wiederum zentral verstellt werden können.

Bei einer weiteren vorteilhaften Ausführungsform weist die Transporteinrichtung Führungselemente zum Führen der Körper der Kunststoffvorformlinge auf. Dabei kann es sich beispielsweise um Führungsschienen handeln, welche besonders bevorzugt unterhalb der Tragleisten angeordnet sind. Bevorzugt können auch diese Führungselemente durch den Verstellmechanismus verstellbar sein. Auch hier ist es möglich, dass der Verstellmechanismus über mehrere Verstelleinheiten auf diese Führungselemente einwirkt.

Bei einer weiteren bevorzugten Ausführungsform sind die Trägerschienen, die Führungselemente und das Niederhalterelement einzeln verstellbar. Es ist jedoch auch eine zentrale Verstellung möglich und bevorzugt.

Bei einer weiteren vorteilhaften Ausführungsform ist auch ein seitlicher Abstand der oben erwähnten Rollen der Sortiereinrichtung veränderbar. Dabei kann bevorzugt ein Antrieb und insbesondere ein motorischer, hydraulischer, pneumatischer und/oder magnetischer Antrieb vorgesehen sein, mittels dessen dieser Abstand veränderbar ist. Unter dem seitlichen Abstand wird dabei insbesondere ein Abstand zwischen den beiden Drehachsen dieser Rollen verstanden.

Bei einer weiteren vorteilhaften Ausführungsform ist die Transporteinrichtung dazu geeignet und bestimmt, einen horizontalen Transport eines zu transportierenden Kunststoffvorformlings vorzunehmen, insbesondere zwischen der Sortiereinrichtung und einer Erwärmungseinrichtung. Bevorzugt ist die Transporteinrichtung dazu geeignet und bestimmt, Kunststoffvorformlinge von der Sortiereinrichtung, insbesondere von dem Rollensortierer, aufzunehmen und/oder überzunehmen und diese wenigstens abschnittsweise und bevorzugt bis hin zu einer Erwärmungseinrichtung, insbesondere einem Ofen, in horizontaler Transportrichtung zu transportieren. Bevorzugt erstreckt sich die Transportrichtung, in der die Transporteinrichtung die Kunststoffvorformlinge transportiert, in horizontaler Richtung.

Bevorzugt weist die Transporteinrichtung eine Beaufschlagungseinrichtung auf, welche dazu geeignet und bestimmt ist, die zu transportierenden Kunststoffvorformlinge mit fluidem Medium und insbesondere mit Druckluft (insbesondere an einer - bevorzugt in Transportrichtung gesehenen rückwärtigen - Außenwandung des zu transportierenden Kunststoffvorformlings) zu beaufschlagen und dadurch die zu transportierenden Kunststoffvorformlinge zu transportieren. Bevorzugt werden die Kunststoffvorformlinge durch die Beaufschlagung mit fluidem Medium, insbesondere Druckluft, beschleunigt und/oder entlang der Transportrichtung bewegt. Bevorzugt weist die Beaufschlagungseinrichtung eine Vielzahl von Transportdüsen auf, über die das fluide Medium, insbesondere Druckluft, mittels welchem (bzw. welcher) ein zu transportierender Kunststoffvorformling beaufschlagt wird, austritt.

Bevorzugt ist/sind die erste Trägerschiene zum Tragen der Kunststoffvorformlinge und/oder die zweite Trägerschiene zum Tragen der Kunststoffvorformlinge (insbesondere ausschließlich) in einer (gemeinsamen) horizontalen Ebene angeordnet. Bevorzugt bildet die erste Trägerschiene und/oder die zweite Trägerschiene und insbesondere bilden alle Trägerschiene der Transporteinrichtung kein Gefälle aus. Bevorzugt ist der Zuführbereich, an dem die Transporteinrichtung einen zu transportierenden Kunststoffvorformling (insbesondere von der Sortiereinrichtung) übernimmt, in derselben horizontalen Ebene angeordnet als ein Abführbereich der Transporteinrichtung, an dem der transportierte Kunststoffvorformling aus der Transporteinrichtung abgeführt wird und insbesondere an eine Erwärmungseinrichtung übergeben wird.

Bevorzugt handelt es sich bei der Transporteinrichtung um eine Horizontalfördereinrichtung, welche insbesondere in Transportrichtung, bevorzugt unmittelbar, nach der Sortiereinrichtung und/oder in einem Auslaufbereich der Sortiereinrichtung angeordnet ist und welche bevorzugt Kunststoffvorformlinge von der Sortiereinrichtung übernimmt. Bevorzugt ist die Horizontalfördereinrichtung in Transportrichtung gesehen vor einer Erwärmungseinrichtung angeordnet und insbesondere werden die von der Transporteinrichtung transportierten Kunststoffvorformlinge (direkt) an die Erwärmungseinrichtung übergeben.

Bevorzugt erfolgt der Transport der Preformen bzw. der Kunststoffvorformlinge zwischen der Sortiereinrichtung, welche insbesondere als Rollensortierer ausgebildet ist, und einer Erwärmungseinrichtung, welche insbesondere als Ofen ausgebildet ist, horizontal, wobei bevorzugt die Preformen bzw. die Kunststoffvorformlinge durch Beaufschlagung mit Druckluft bewegt werden.

Es wird darauf hingewiesen, dass die unten noch beschriebenen Ausführungsformen mit den hier obenstehenden Ausführungen kombinierbar sind, insbesondere um die gesamte Bedienung der hier beschriebenen Vorrichtungen zu erleichtern.

Die vorliegende Erfindung ist weiterhin auf ein Verfahren zum Transportieren von Kunststoffvorformlingen gerichtet, wobei die Kunststoffvorformlinge mittels einer Sortiereinrichtung sortiert werden, mit mit einer in der Transportrichtung nach der Sortiereinrichtung angeordneten Transporteinrichtung transportiert zu werden und wobei diese Transporteinrichtung eine erste Trägerschiene zum Tragen der Kunststoffvorformlinge und eine zweite Trägerschiene zum Tragen der Kunststoffvorformlinge aufweist und die Kunststoffvorformlinge zwischen dieser ersten Trägerschiene und dieser zweiten Trägerschiene transportiert werden und wobei sich diese Trägerschienen entlang der Transportrichtung erstrecken, wobei die Sortiereinrichtung bevorzugt zwei zueinander beabstandete Rollen aufweist, zwischen denen die Kunststoffvorformlinge transportiert werden.

Erfindungsgemäß weist die Vorrichtung einen Verstellmechanismus zum Verstellen mindestens eines seitlichen Abstands dieser Trägerschienen auf, wobei dieser Verstellmechanismus mehrere Verstelleinheiten aufweist, welche entlang der Transporteinrichtung hintereinander angeordnet sind, wobei diese Verstelleinheiten jeweils eine Verstellung des seitlichen Abstands (d.h. eines Abstands der senkrecht zu den Längsrichtungen der jeweiligen Elemente steht) ermöglichen und wobei die Verstelleinheiten derart mechanisch miteinander gekoppelt werden, dass die Verstelleinheiten gemeinsam verstellbar sind.

Es wird daher auch verfahrensseitig eine zumindest teilweise zentralisierte Verstellung der Verstelleinheiten und damit auch der besagten Tragleisten vorgeschlagen.

Bevorzugt erfolgt der Transport der Kunststoffvorformlinge, insbesondere der durch die Transporteinrichtung zu transportierenden Kunststoffvorformlinge, horizontal. Bevorzugt erfolgt der Transport der Kunststoffvorformlinge im Anschluss an die Sortiereinrichtung wenigstens abschnittsweise und bevorzugt zwischen der Sortiereinrichtung, welche insbesondere als Rollensortierer ausgebildet ist, und einer Erwärmungseinrichtung, welche bevorzugt als Ofen ausgebildet ist und welche besonders bevorzugt die Kunststoffvorformlinge vor deren und insbesondere zu deren Expansion in Kunststoffbehältnisse erwärmt, horizontal.

Bevorzugt werden die durch die Transporteinrichtung transportierten Kunststoffvorformlinge, insbesondere während deren horizontalem Transport, mit fluidem Medium und insbesondere mit Druckluft beaufschlagt. Bevorzugt werden die Kunststoffvorformlinge durch Beaufschlagung mit Druckluft bewegt, und insbesondere hierdurch ein Transport in horizontale Transportrichtung bewirkt. Bevorzugt werden die von der Transporteinrichtung zu transportierenden Kunststoffvorformlinge mit Druckluft, insbesondere ausschließlich mit Druckluft, beschleunigt und besonders bevorzugt hierdurch von der Sortiereinrichtung, insbesondere von einem Auslaufbereich der Sortiereinrichtung in Transportrichtung weg bewegt (insbesondere horizontal), bevorzugt zu einer Erwärmungseinrichtung (insbesondere einem Ofen) transportiert. Bevorzugt wird wenigstens ein Bereich eines Kunststoffvorformlings zwischen der Sortiereinrichtung und der Erwärmungseinrichtung (ausschließlich) in einer horizontalen Ebene transportiert.

Wie oben erwähnt, weist die erfindungsgemäße Vorrichtung auch eine Sortiereinrichtung insbesondere in Form eines sogenannten Rollensortierers auf. Auch eine Umstellung dieses Rollensortierers ist teilweise aufwändig.

Die vorliegende Erfindung ist daher weiterhin auf eine Vorrichtung zum Transportieren von Kunststoffvorformlingen mit einer Sortiereinrichtung gerichtet, welche zum Sortieren von Kunststoffvorformlingen geeignet und bestimmt ist und welche die Kunststoffvorformlinge in einer vorgegebenen Transportrichtung transportiert sowie mit einer in der Transportrichtung nach der Sortiereinrichtung angeordneten Transporteinrichtung, wobei diese Transporteinrichtung eine erste Trägerschiene zum Tragen der Kunststoffvorformlinge und eine zweite Trägerschiene zum Tragen der Kunststoffvorformlinge aufweist, und die Kunststoffvorformlinge zwischen dieser ersten Trägerschiene und dieser zweiten Trägerschiene transportierbar sind, wobei sich diese Trägerschienen entlang der Transportrichtung erstrecken und wobei die Sortiereinrichtung zwei zueinander beabstandete Rollen aufweist, zwischen denen die Kunststoffvorformlinge führbar sind. Vorteilhaft sind diese beiden Rollen jeweils bezüglich ihrer Längsrichtung drehbar. Erfindungsgemäß weist die Vorrichtung einen Verstellmechanismus zum Verstellen mindestens eines seitlichen Abstands der Trägerschienen auf und auch die Rollen der Sortiereinrichtung sind bezüglich einander verstellbar, wobei die Sortiereinrichtung bevorzugt eine Antriebseinrichtung zum Verstellen der Rollen aufweist.

Weiterhin ist es insbesondere bevorzugt, dass ein seitlicher Abstand dieser Rollen verändert werden kann. Diese Abstandsänderung kann dabei insbesondere in Reaktion auf eine andere Gattung an Kunststoffvorformlingen erfolgen.

Dabei ist es denkbar, dass lediglich die Position nur einer Rolle verändert wird. Bevorzugt wird der Abstand der beiden Rollen gleichmäßig geändert, das heißt die Rollen bleiben bevorzugt vor und nach einer Umstellung parallel zueinander. Bevorzugt erfolgt somit eine parallele Verschiebung der Rollen bezüglich einander.

Bei einer weiteren vorteilhaften Ausführungsform weist die Antriebseinrichtung einen motorischen Antrieb auf. Es wird daher vorgeschlagen, dass die Verstellung wenigstens einer und bevorzugt beider Rollen motorisch erfolgt.

Im Stand der Technik müssen derzeit diese Umstellungen manuell vorgenommen werden. Dabei erfolgt üblicherweise eine Verstellung eines Rollenabstands einseitig, das heißt nur eine Rolle wird bewegt und bevorzugt mittels eines Handrades und eines Zählwerks. Eine mechanische Bewegung eines Stellrades kann über eine Königswelle auf die Trapezspindeln und Lineareinheiten übertragen werden. Insbesondere bei Maschinen mit mehreren zu behandelnden Typen an Kunststoffvorformlingen führen diese manuellen Einstelltätigkeiten im internen Stand der Technik der Anmelderin zu inkorrekten Werten, die das Wiederanlaufverhalten und die Produktion nach einem Umstellvorgang negativ beeinflussen.

Daneben beanspruchen diese Umstelltätigkeiten Arbeitszeit. Es wird also im Rahmen dieser Erfindung vorgeschlagen, dass eine stufenlose Verstellung des Abstandes der Rollen zueinander insbesondere über einen motorischen Antrieb erfolgt. So kann beispielsweise eine rotierende Bewegung einer Antriebswelle für mechanische Übertragungselemente wie Kegelräder, eine Königswelle oder Spindeleinheiten an eine Lineareinheit übergeben werden, auf deren verschiebbaren Schlitten die Rollenverlagerungen der Sortierrollen angeordnet sind.

Zur Umsetzung dieser beschriebenen Funktion ist auch die Verwendung unterschiedlicher Lineareinheiten, wie beispielsweise Kegelumlaufführungen, Trapezführungen, Gleitlager usw. denkbar. Daneben kann auch eine Vielzahl bekannter Elemente aus der Antriebstechnik verwendet werden, wie beispielsweise Zahnriemen, umlaufende Wellen mit Kegelrädern, Zahnstangen, motorische oder pneumatische Antriebe und dergleichen.

Daneben wäre es auch denkbar, dass einzeln angetriebene Lineareinheiten vorgesehen sind, die steuerungstechnisch gekoppelt sind, insbesondere um den Synchronlauf und die Parallelität der Rollen zu gewährleisten.

Die beschriebene automatische Rollenverstellung bietet den Vorteil der Verringerung der manuellen Prozesse und einer Verbesserung der Ergonomie bei einer entsprechenden Produktumstellung. Auf diese Weise können Fehler vermieden werden und die Reproduzierbarkeit der preformspezifisch definierten Einstellwerte eines Rollenabstands wird wesentlich verbessert.

Insbesondere in Verbindung mit einer automatisch verstellbaren Zuführschiene und einem Wechselpaket ist auch eine automatische Rollenverstellung denkbar und führt so zu einem effektiven Produktwechsel. Bevorzugt können dabei sowohl die oben beschriebene Ausgestaltung als auch die hier beschriebene Ausgestaltung Anwendung finden, um so eine automatisierte oder teilautomatisierte Umstellung auf unterschiedliche Kunststoffvorformlinge zu erreichen. Daneben ermöglichen die fehlerfrei reproduzierbaren Einstellungen einen raschen Wiederanlauf einer Produktion ohne lange Einstell- und Einschwingphasen des Systems.

Die Erfindung ist auch insbesondere in Verbindung mit übergeordneten Leitsteuerungen denkbar. Bei einer weiteren bevorzugten Ausführungsform ist es auch denkbar, dass eine Verstellung der Rollen der Rollensortierer und/oder der oben beschriebenen Zuführschienen der Kunststoffvorformlinge motorisch und/oder pneumatisch erfolgt. Daneben kann auch eine rezeptabhängige Umstellung erfolgen.

Bei einer weiteren vorteilhaften Ausführungsform weist die Vorrichtung eine Steuereinheit auf, welche eine insbesondere rezeptabhängige Verstellung der Zuführschienen für die Kunststoffvorformlinge, der Rollen des Rollensortierers sowie einen Wechsel gegebenenfalls eines Garniturenpakets zwischen dem Rollensortierer und der Zuführschiene für die Kunststoffvorformlinge ermöglicht.

Auch wäre es denkbar, eine (voll) automatische Umstellung der einzelnen Komponenten vorzusehen also sowohl der Rollen als auch der nachfolgenden Transporteinrichtung.

Bei einer weiteren vorteilhaften Ausführungsform weist die Vorrichtung eine Lagereinrichtung auf, mittels derer wenigstens eine Rolle derart gelagert ist, dass diese Rolle senkrecht zu ihrer Längsrichtung verschiebbar ist. Bevorzugt ist damit die Rolle auch senkrecht zu ihrer Drehachse verschiebbar.

Bei einer weiteren bevorzugten Ausführungsform können beide Rollen verschiebbar sein. Auf diese Weise wäre es möglich, einen Transportpfad der Kunststoffvorformlinge beizubehalten und gleichzeitig einen Abstand der Rollen zu verändern, etwa um Kunststoffvorformlinge mit größeren oder kleineren Querschnitten behandeln zu können.

Bei einer weiteren bevorzugten Ausführungsform weist die Vorrichtung einen Auslaufmechanismus auf, um einzelne Kunststoffvorformlinge aus ihrem Transportpfad auszuschleusen. Dabei kann beispielsweise ein sogenanntes Kickerrad vorgesehen sein, welches falsch orientierte Kunststoffvorformlinge aus dem Transportpfad ausschleust. Bei einer weiteren bevorzugten Ausführungsform ist auch eine Positionierung dieses Auswurfmechanismus einstellbar und insbesondere auf unterschiedliche Geometrien der Kunststoffvorformlinge einstellbar.

Bei einer weiteren vorteilhaften Ausführungsform sind ein Verstellmechanismus zum Verstellen der Rollen und ein Verstellmechanismus zum Verstellen der Führungsschienen miteinander gekoppelt. Dabei kann diese Kopplung auch elektronisch erfolgen, beispielsweise über eine Steuerungseinrichtung. Denkbar wäre jedoch auch eine mechanische Kopplung. Bei dieser bevorzugten Ausgestaltung kann gemeinsam eine vollständige Umstellung des gesamten Sortier- und Transportvorgangs erfolgen.

Bei einer weiteren vorteilhaften Ausführungsform weist die Antriebseinrichtung zum Verstellen der Rollen Kopplungselemente und/oder Kraftübertragungselemente auf, die aus einer Gruppe von Kopplungselementen und/oder Kraftübertragungselementen ausgewählt sind, welche Trapezspindeln, Königswellen, Kegelräder, Spindeleinheiten, Kugelumlaufführungen, Trapezführungen, Gleitlager, umlaufende Wellen und dergleichen enthält.

Bei einer weiteren vorteilhaften Ausführungsform ist die Transporteinrichtung dazu geeignet und bestimmt, einen horizontalen Transport eines zu transportierenden Kunststoffvorformlings vorzunehmen, insbesondere zwischen der Sortiereinrichtung und einer Erwärmungseinrichtung. Bevorzugt ist die Transporteinrichtung dazu geeignet und bestimmt, Kunststoffvorformlinge von der Sortiereinrichtung, insbesondere von dem Rollensortierer, aufzunehmen und/oder überzunehmen und diese wenigstens abschnittsweise und bevorzugt bis hin zu einer Erwärmungseinrichtung, insbesondere einem Ofen, in horizontaler Transportrichtung zu transportieren. Bevorzugt erstreckt sich die Transportrichtung, in der die Transporteinrichtung die Kunststoffvorformlinge transportiert, in horizontaler Richtung.

Bevorzugt weist die Transporteinrichtung eine Beaufschlagungseinrichtung auf, welche dazu geeignet und bestimmt ist, die zu transportierenden Kunststoffvorformlinge mit fluidem Medium und insbesondere mit Druckluft (insbesondere an einer - bevorzugt in Transportrichtung gesehenen rückwärtigen - Außenwandung des zu transportierenden Kunststoffvorformlings) zu beaufschlagen und dadurch die zu transportierenden Kunststoffvorformlinge zu transportieren. Bevorzugt werden die Kunststoffvorformlinge durch die Beaufschlagung mit fluidem Medium, insbesondere Druckluft, beschleunigt und/oder entlang der Transportrichtung bewegt. Bevorzugt weist die Beaufschlagungseinrichtung eine Vielzahl von Transportdüsen auf, über die das fluide Medium, insbesondere Druckluft, mittels welchem (bzw. welcher) ein zu transportierender Kunststoffvorformling beaufschlagt wird, austritt.

Bevorzugt ist/sind die erste Trägerschiene zum Tragen der Kunststoffvorformlinge und/oder die zweite Trägerschiene zum Tragen der Kunststoffvorformlinge (insbesondere ausschließlich) in einer (gemeinsamen) horizontalen Ebene angeordnet. Bevorzugt bildet die erste Trägerschiene und/oder die zweite Trägerschiene und insbesondere bilden alle Trägerschienen der Transporteinrichtung kein Gefälle aus. Bevorzugt ist der Zuführbereich, an dem die Transporteinrichtung einen zu transportierenden Kunststoffvorformling (insbesondere von der Sortiereinrichtung) übernimmt, in derselben horizontalen Ebene angeordnet als ein Abführbereich der Transporteinrichtung, an dem der transportierte Kunststoffvorformling aus der Transporteinrichtung abgeführt wird und insbesondere an eine Erwärmungseinrichtung übergeben wird.

Bevorzugt handelt es sich bei der Transporteinrichtung um eine Horizontalfördereinrichtung, welche insbesondere in Transportrichtung, bevorzugt unmittelbar, nach der Sortiereinrichtung und/oder in einem Auslaufbereich der Sortiereinrichtung angeordnet ist und welche bevorzugt Kunststoffvorformlinge von der Sortiereinrichtung übernimmt. Bevorzugt ist die Horizontalfördereinrichtung in Transportrichtung gesehen vor einer Erwärmungseinrichtung angeordnet und insbesondere werden die von der Transporteinrichtung transportierten Kunststoffvorformlinge (direkt) an die Erwärmungseinrichtung übergeben.

Bevorzugt erfolgt der Transport der Preformen bzw. der Kunststoffvorformlinge zwischen der Sortiereinrichtung, welche insbesondere als Rollensortierer ausgebildet ist, und einer Erwärmungseinrichtung, welche insbesondere als Ofen ausgebildet ist, horizontal, wobei bevorzugt die Preformen bzw. die Kunststoffvorformlinge durch Beaufschlagung mit Druckluft bewegt werden.

Die vorliegende Erfindung ist weiterhin auf ein Verfahren zum Transportieren von Kunststoffvorformlingen gerichtet, wobei die Kunststoffvorformlinge mit einer Sortiereinrichtung sortiert und mit einer in der Transportrichtung nach der Sortiereinrichtung angeordneten Transporteinrichtung transportiert werden, wobei diese Transporteinrichtung eine erste Trägerschiene zum Tragen der Kunststoffvorformlinge und eine zweite Trägerschiene zum Tragen der Kunststoffvorformlinge aufweist und die Kunststoffvorformlinge zwischen dieser ersten Trägerschiene und dieser zweiten Trägerschiene transportiert werden, wobei sich diese Trägerschienen entlang der Transportrichtung erstrecken, wobei die Sortiereinrichtung zwei zueinander beabstandete Rollen aufweist, zwischen denen die Kunststoffvorformlinge transportiert werden.

Erfindungsgemäß weist die Vorrichtung einen Verstellmechanismus zum Verstellen zumindest eines seitlichen Abstands dieser Trägerschienen auf, und wenigstens zeitweise wird ein seitlicher Abstand der Rollen zueinander insbesondere mit Hilfe einer Antriebseinrichtung verändert. Es wird daher auch verfahrensseitig vorgeschlagen, dass eine angetriebene bzw. eine motorische Änderung eines Abstands der Rollen vorgenommen wird.

Bevorzugt erfolgt der Transport der Kunststoffvorformlinge, insbesondere der durch die Transporteinrichtung zu transportierenden Kunststoffvorformlinge, horizontal. Bevorzugt erfolgt der Transport der Kunststoffvorformlinge im Anschluss an die Sortiereinrichtung wenigstens abschnittsweise und bevorzugt zwischen der Sortiereinrichtung, welche insbesondere als Rollensortierer ausgebildet ist, und einer Erwärmungseinrichtung, welche bevorzugt als Ofen ausgebildet ist und welche besonders bevorzugt die Kunststoffvorformlinge vor deren und insbesondere zu deren Expansion in Kunststoffbehältnisse erwärmt, horizontal.

Bevorzugt werden die durch die Transporteinrichtung transportierten Kunststoffvorformlinge, insbesondere während deren horizontalem Transport, mit fluidem Medium und insbesondere mit Druckluft beaufschlagt. Bevorzugt werden die Kunststoffvorformlinge durch Beaufschlagung mit Druckluft bewegt, und insbesondere hierdurch ein Transport in horizontale Transportrichtung bewirkt. Bevorzugt werden die von der Transporteinrichtung zu transportierenden Kunststoffvorformlinge mit Druckluft, insbesondere ausschließlich mit Druckluft, beschleunigt und besonders bevorzugt hierdurch von der Sortiereinrichtung, insbesondere von einem Auslaufbereich der Sortiereinrichtung in Transportrichtung weg bewegt (insbesondere horizontal), bevorzugt zu einer Erwärmungseinrichtung (insbesondere einem Ofen) transportiert. Bevorzugt wird wenigstens ein Bereich eines Kunststoffvorformlings zwischen der Sortiereinrichtung und der Erwärmungseinrichtung (ausschließlich) in einer horizontalen Ebene transportiert.

Weitere Vorteile und Ausführungsformen ergeben sich aus den beigefügten Zeichnungen:
Darin zeigen:
- Fig. 1a, 1b: Zwei Darstellungen einer Transporteinrichtung nach dem Stand der Technik;
- Fig. 2: Eine Darstellung einer erfindungsgemäßen Transporteinrichtung mit manueller Verstellmöglichkeit;
- Fig. 3: Eine Darstellung einer erfindungsgemäßen Transporteinrichtung mit motorisierter Verstellmöglichkeit;
- Fig. 4: Eine Schnittdarstellung der in Figur 3 gezeigten Transporteinrichtung;
- Fig. 5: Eine weitere Darstellung einer erfindungsgemäßen Transporteinrichtung;
- Fig. 6: Eine Schnittdarstellung der in Figur 5 gezeigten Transporteinrichtung;
- Fig. 7: Eine Darstellung eines Stellglieds für eine erfindungsgemäße Transporteinrichtung;
- Fig. 8: Eine teilweise Darstellung einer Sortiereinrichtung;
- Fig. 9: Eine weitere teilweise Darstellung einer Sortiereinrichtung;
- Fig. 10: Eine Darstellung einer Vorrichtung zum Umformen von Kunststoffvorformlingen zu Kunststoffbehältnissen mit einer erfindungsgemäßen Vorrichtung.

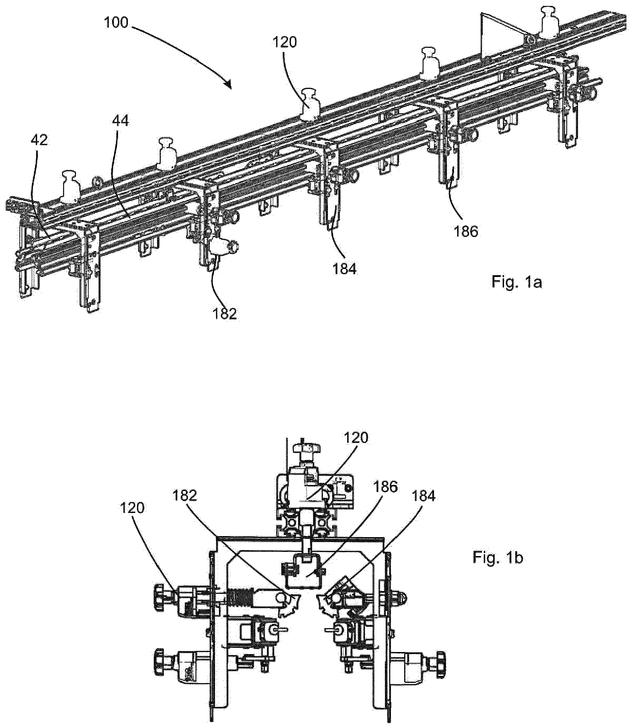

Die Figuren 1a und 1b zeigen zwei Darstellungen einer Transporteinrichtung zum Transportieren von Kunststoffvorformlingen nach dem Stand der Technik. Man erkennt hier, dass die Vorrichtung eine Vielzahl von Verstelleinheiten 182, 184, 186 aufweist. Diese weisen jeweils mehrere Stellglieder 120 auf, mit denen eine separate Einstellung an den unterschiedlichen Punkten möglich ist. Auf diese Weise ist die gesamte Einstellung relativ aufwändig.

Figur 1b zeigt eine Schnittdarstellung der in Figur 1a gezeigten Vorrichtung. Auch hier erkennt man wieder die Führungsleisten 182, 184 sowie auch das Niederhalterelement 186. Diese Elemente sind jeweils getrennt voneinander einzustellen. Auf diese Weise ergibt sich im Stand der Technik ein relativ hoher Aufwand zur Umstellung auf unterschiedliche Geometrien von Kunststoffvorformlingen.

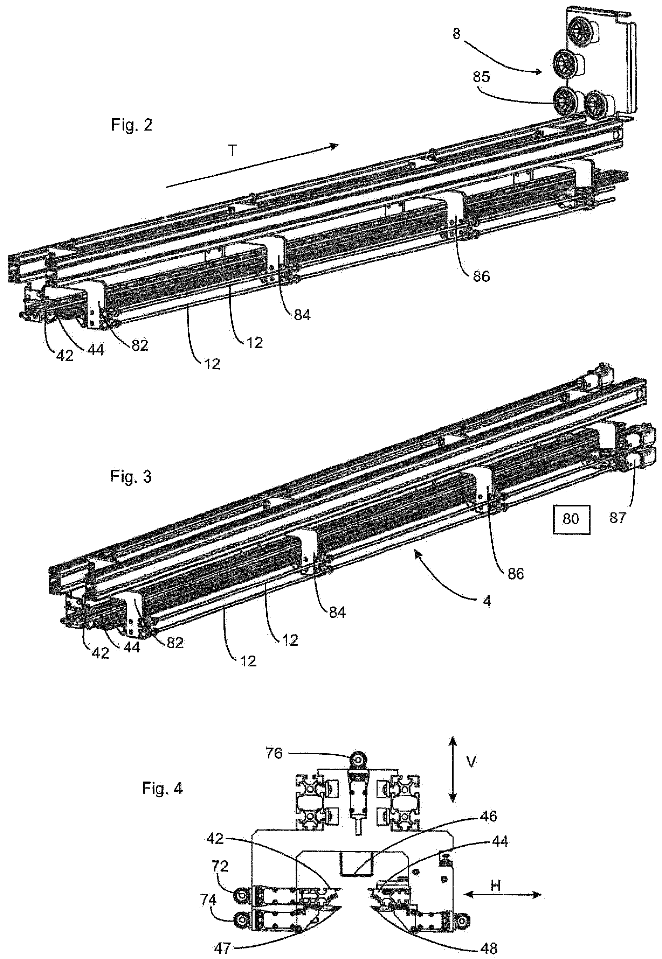

Figur 2 zeigt eine erfindungsgemäße Transporteinrichtung. Auch hier sind Verstelleinheit 82, 84, 86 vorgesehen, die in der Transportrichtung T der Kunststoffvorformlinge hintereinander angeordnet sind. Das Bezugszeichen 8 kennzeichnet in seiner Gesamtheit eine Stelleinrichtung. Diese Stelleinrichtung weist hier insgesamt vier mit der Hand betätigbare Betätigungselemente auf. Mittels dieser Betätigungselemente können unterschiedliche Einstellungen vorgenommen werden, etwa die Führungsleisten 42, 44 bewegt werden, oder auch untere Führungsschienen bewegt werden, oder auch die Position eines Niederhalterelements verstellt werden.

Die Bezugszeichen 12 beziehen sich auf Koppelelemente, welche die einzelnen Verstelleinheiten 82, 84 und 86 miteinander koppeln. Auf diese Weise können mittels der Betätigungselemente sämtliche Verstelleinheiten 82, 84 und 86 bzw. die dortigen Aufhängepunkte etwa der Führungsleisten 42 und 44 gemeinsam verstellt werden.

Figur 3 zeigt eine weitere Ausgestaltung einer erfindungsgemäßen Transporteinrichtung. Anstelle der Betätigungselemente 85 sind hier motorische Antriebe 87 vorgesehen, die jeweils mit den Kopplungselementen 12 gekoppelt sind. Diese Motoren können damit eine motorische Verstellung der einzelnen Elemente der Transporteinrichtung 4 übernehmen.

Daneben kann eine (nur schematisch dargestellte) Steuerungseinrichtung 80 vorgesehen sein, welche die einzelnen Motoren 87 aufeinander abstimmt. Auf diese Weise kann beispielsweise vollautomatisch ein neues Rezept ausgewählt werden bzw. neue Kunststoffvorformlinge eingegeben werden und auf Basis dieses Rezepts können die einzelnen Motoren 87 automatisch angesteuert werden und eine vollständige Einstellung sämtlicher Führungselemente, das heißt beispielsweise der Führungsleisten 42 und 44 als auch des Niederhalterelements übernehmen.

Figur 4 zeigt eine weitere Darstellung einer erfindungsgemäßen Vorrichtung. Hier sind wieder die beiden Trägerschienen 42 und 44 erkennbar. Man erkennt, dass diese Führungsschienen 42 und 44 mittels Antrieben verstellbar sind, beispielsweise in der horizontalen Richtung H verschoben werden können, um so eine Einstellung auf unterschiedliche Geometrien von Kunststoffvorformlingen zu erreichen. Das Niederhalterelement 46 kann insbesondere in der vertikalen Richtung V verstellt werden, um so auch beispielsweise eine Anpassung an unterschiedliche Gewindehöhen der Kunststoffvorformlinge zu erreichen.

Die Bezugszeichen 47 und 48 zeigen Führungselemente zum Führen des Grundkörpers der Kunststoffvorformlinge. Die Bezugszeichen 72, 74 und 76 kennzeichnen Anlenkungmittel, über die beispielsweise eine Welle angelenkt werden kann, um so einen Spindelantrieb zu bewerkstelligen, der die eigentliche Verstellung der Führungselemente bewirkt. Bei der in Figur 4 gezeigten Ausführungsform ist es möglich, dass das Führungselement 48 bzw. dessen Bewegung an die Bewegung der Trägerschiene 44 gekoppelt ist. Es wäre jedoch eine getrennte Ansteuerung möglich.

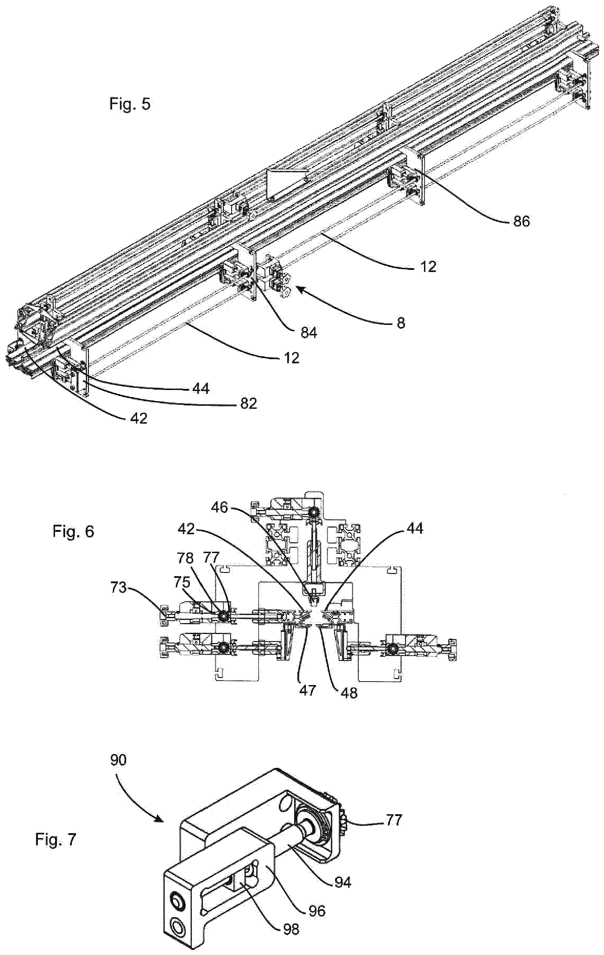

Figur 5 zeigt eine weitere Ausgestaltung einer erfindungsgemäßen Transporteinrichtung. Auch hier sind wieder die drei Verstelleinheiten 82, 84 und 86 erkennbar, welche über eine Stange 12 miteinander gekoppelt sind. Das Bezugszeichen 8 kennzeichnet den Verstellmechanismus, mit dem zentral sämtliche Verstelleinheiten 82, 84 und 86 bzw. die jeweiligen Trägerschienen und auch Führungselemente verstellt werden können.

Figur 6 zeigt wiederum eine Schnittdarstellung der in Figur 5 gezeigten Transporteinrichtung. Auch hier sind wieder die Schienen 42 und 44 erkennbar. Das Bezugszeichen 73 kennzeichnet ein drehbares Betätigungselement, welches ein Zahnrad 75 antreibt, dieses wiederum ein Rad 78 und ein weiteres Zahnrad 77. An das Zahnrad 77 ist ein Spindelantrieb gekoppelt, mit dem letztlich die Querbewegung der Trägerschienen 42 erreicht werden kann. Über ein weiteres Betätigungselement kann entsprechend eine Bewegung des Führungselements 47 erreicht werden.

Entsprechend kann auch, wie in Figur 6 gezeigt, eine vertikale Bewegung des Niederhalterelements 46 bewerkstelligt werden.

Über die jeweiligen Zahnräder kann, wie oben erwähnt die Stange bzw. die drehbare Stange 12 befestigt werden und auf diese Weise können wie oben erwähnt mehrere Verstelleinheiten gleichzeitig betätigt werden.

Figur 7 zeigt eine detaillierte Darstellung eines Stellglieds 90. Dabei ist das Zahnrad 77 erkennbar, welches eine Welle 94 antreibt. Das Bezugszeichen 98 kennzeichnet einen Spindelantrieb, der letztlich die Horizontalverstellung beispielsweise der Trägerschiene 42 oder 44 bewirkt. Das Bezugszeichen 96 kennzeichnet einen entsprechenden Träger dieses Spindelantriebs.

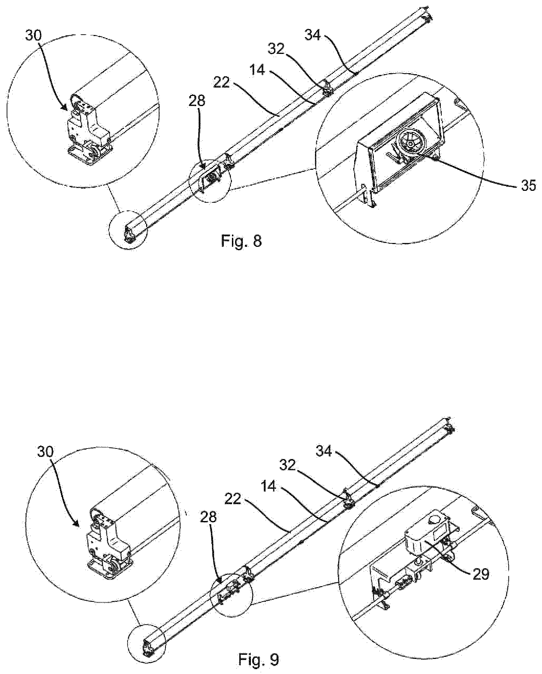

Figur 8 zeigt eine Darstellung eines Teils der Sortiereinrichtung, insbesondere eine der drehbaren Rollen 22. Diese drehbare Rolle kann mittels einer Verstelleinheit 28 seitlich verschoben werden, das heißt senkrecht zu ihrer Drehrichtung. Das Bezugszeichen 14 kennzeichnet wiederum eine drehbare Welle, die für diese Verstellung zuständig ist. Das Bezugszeichen 34 kennzeichnet ein Verbindungselement, mit dem Abschnitte dieser Welle miteinander verbunden werden können.

Das Bezugszeichen 30 kennzeichnet in seiner Gesamtheit das Stellelement, mit dem die Rolle 22 verschoben werden kann. Zu diesem Zweck kann die Rolle 22 an einem Schlitten angeordnet sein, der wiederum in der beispielsweise horizontalen Richtung verschiebbar gegenüber einem Träger angeordnet ist. Auch kann hier wieder ein (nicht im Detail gezeigter) Spindelantrieb vorgesehen sein, der diese Verstellung bewirkt.

Das Bezugszeichen 35 kennzeichnet ein Betätigungselement, wie etwa ein drehbares Rad, mit dem die Verstellung zentral bewerkstelligt werden kann. Dabei kann dieses Betätigungselement 35 beispielsweise sowohl auf den Träger bzw. das Element 30 wie auch etwa auf den Träger bzw. das Element 32 wirken, um so eine parallele Verschiebung der gesamten Rolle zu ermöglichen.

Bei der in Figur 9 gezeigten Vorrichtung ist die eigentliche Verstellung entsprechend der in Figur 8 gezeigten aufgebaut. Anstelle eines Betätigungselements 35 ist hier jedoch ein motorischer Antrieb 29 vorgesehen, der wiederum eine Drehung der Welle 14 und damit eine Verstellung der gesamten Rolle bewirkt.

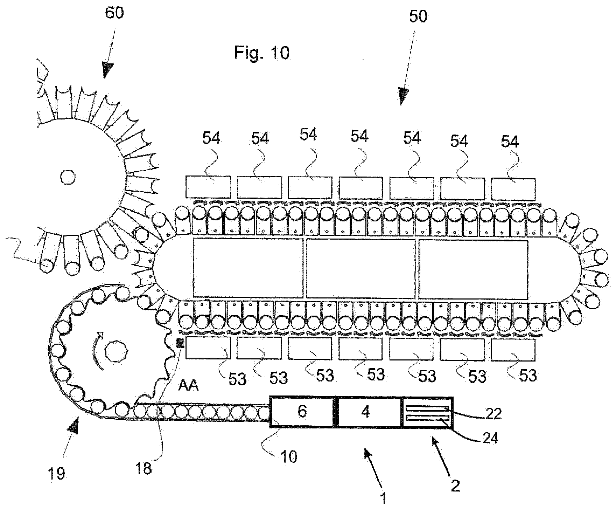

Figur 10 zeigt eine Darstellung einer erfindungsgemäßen Vorrichtung zum Behandeln von Kunststoffvorformlingen. Dabei werden die Kunststoffvorformlinge zunächst mit der erfindungsgemäßen Vorrichtung 1 sortiert und transportiert. Das Bezugszeichen 19 kennzeichnet eine Eintakteinrichtung, welche die Kunststoffvorformlinge beabstandet und so in diesem beabstandeten Zustand einer Erwärmungseinrichtung 50 zuführt. Diese Erwärmungseinrichtung weist ebenfalls eine Transporteinrichtung auf, welche die Kunststoffvorformlinge 10 transportiert und dabei insbesondere an Heizelementen 53 und 54 vorbei transportiert, um diese so zu erwärmen. An die Heizeinrichtung schließt sich eine weitere Transporteinrichtung 60 an, wie etwa ein Transferstern, der die Kunststoffvorformlinge letztlich einer Vorrichtung zum Umformen von Kunststoffvorformlingen zu Kunststoffbehältnissen zuführt. Das Bezugszeichen 18 kennzeichnet eine Temperaturmesseinrichtung, welche eine Eingangstemperatur der Kunststoffvorformlinge bestimmt.

Die Sortiereinrichtung 2 weist wie hier dargestellt zwei Rollen 22 und 24 auf, die parallel zueinander angeordnet sind und zwischen denen die Kunststoffvorformlinge gefördert werden können.

### Bezugszeichenliste

- 1: Vorrichtung
- 2: Sortiereinrichtung
- 4: Transporteinrichtung
- 8: Stelleinrichtung
- 10: Kunststoffvorformlinge
- 12: Koppelelemente
- 12: drehbare Stange
- 14: drehbare Welle
- 18: Temperaturmesseinrichtung
- 19: Eintakteinrichtung
- 22: drehbare Rollen
- 24: Rolle
- 28: Verstelleinheit
- 29: motorischer Antrieb
- 30: Stellelement
- 32: Element
- 34: Verbindungselement
- 35: Betätigungselement
- 42: Führungsleiste, Trägerschiene
- 44: Führungsleiste, Trägerschiene
- 46: Niederhalterelement
- 47: Führungselement
- 48: Führungselement
- 50: Erwärmungseinrichtung
- 53: Heizelement
- 54: Heizelement
- 60: Transporteinrichtung
- 72: Anlenkungsmittel
- 73: drehbares Betätigungselement
- 74: Anlenkungsmittel
- 75: Zahnrad
- 76: Anlenkungsmittel
- 77: Zahnrad
- 78: Zahnrad
- 80: Steuerungseinrichtung
- 82: Stelleinheit
- 84: Stelleinheit
- 85: Betätigungselemente
- 86: Stelleinheit
- 87: Motoren
- 94: Welle
- 96: Träger des Spindelantriebs
- 98: Spindelantrieb
- 120: Stellglieder
- 182: Stellelement; Führungsleiste
- 184: Stellelement; Führungsleiste
- 186: Stellelement; Niederhalterelement
- T: Transportrichtung der Kunststoffvorformlinge
- H: horizontale Richtung
- V: vertikale Richtung

## Patentansprüche

1. Vorrichtung (1) zum Transportieren von Kunststoffvorformlingen mit einer Sortiereinrichtung (2), welche zum Sortieren von Kunststoffvorformlingen geeignet und bestimmt ist und welche die Kunststoffvorformlinge (10) in einer vorgegebenen Transportrichtung transportiert und mit einer in der Transportrichtung nach der Sortiereinrichtung (2) angeordneten Transporteinrichtung (4), wobei diese Transporteinrichtung (4) eine erste Trägerschiene (42) zum Tragen der Kunststoffvorformlinge (10) und eine zweite Trägerschiene (44) zum Tragen der Kunststoffvorformlinge (10) aufweist und die Kunststoffvorformlinge (10) zwischen dieser ersten Trägerschiene (42) und dieser zweiten Trägerschiene (44) transportierbar sind, wobei sich diese Trägerschienen (42, 44) entlang der Transportrichtung erstrecken, wobei die Sortiereinrichtung zwei zueinander beanstandete Rollen (22, 26) aufweist, zwischen denen die Kunststoffvorformlinge (10) führbar sind
wobei
die Vorrichtung (1) einen Verstellmechanismus (8) zum Verstellen zumindest eines seitlichen Abstandes dieser Trägerschienen (42, 44) aufweist **dadurch gekennzeichnet, dass** dieser Verstellmechanismus mehrere Verstelleinheiten (82, 84, 86) aufweist, welche entlang der Transportrichtung hintereinander angeordnet sind, wobei diese Verstelleinheiten (82, 84, 86) jeweils eine Verstellung des seitlichen Abstandes ermöglichen und wobei diese Verstelleinheiten (82, 84, 86) miteinander mechanisch derart gekoppelt sind, dass die Verstelleinheiten (82, 84, 86) gemeinsam verstellbar sind.

2. Vorrichtung (1) nach Anspruch 1,
**dadurch gekennzeichnet, dass**
die Verstelleinheiten (82, 84, 86) mittels wenigstens einer mechanischen Kopplungseinrichtung miteinander gekoppelt sind.

3. Vorrichtung (1) nach dem vorangegangenen Anspruch,
**dadurch gekennzeichnet, dass**
die Kopplungseinrichtung (12) wenigstens einen drehbaren und/oder entlang seiner Längsrichtung verschiebbaren stangenartigen Körper aufweist.

4. Vorrichtung (1) nach wenigstens einem der vorangegangenen Ansprüche,
**dadurch gekennzeichnet, dass**
die Vorrichtung eine Antriebseinrichtung zum Antreiben der Verstelleinheiten aufweist.

5. Vorrichtung (1) nach wenigstens einem der vorangegangenen Ansprüche,
**dadurch gekennzeichnet, dass**
die Transporteinrichtung (4) ein Niederhalterelement (46) aufweist, welches sich wenigstens abschnittsweise entlang der Transportrichtung (T) erstreckt und welches bevorzugt ebenfalls durch den Verstellmechanismus verstellbar ist.

6. Vorrichtung (1) nach wenigstens einem der vorangegangenen Ansprüche,
**dadurch gekennzeichnet, dass**
die Transporteinrichtung (4) Führungselemente (47, 48) zum Führen der Preformkörper aufweist.

7. Vorrichtung (1) nach dem vorangegangenen Anspruch,
**dadurch gekennzeichnet, dass**
die Führungselemente (47, 48) ebenfalls durch den Verstellmechanismus verstellbar sind.

8. Vorrichtung (1) nach wenigstens einem der vorangegangenen Ansprüche,
**dadurch gekennzeichnet, dass**
ein Abstand der beiden Rollen (22, 24) der Sortiereinrichtung ebenfalls verstellbar ist.

9. Vorrichtung (1) nach wenigstens einem der vorangegangenen Ansprüche,
**dadurch gekennzeichnet, dass**
die Trägerschienen (42, 44), die Führungselemente (47, 48) und das Niederhalterelement (46) einzeln verstellbar sind.

10. Verfahren zum Transportieren von Kunststoffvorformlingen wobei die Kunststoffvorformlinge mit einer Sortiereinrichtung (2) sortiert und mit einer in der Transportrichtung nach der Sortiereinrichtung (2) angeordneten Transporteinrichtung (4) transportiert werden, wobei diese Transporteinrichtung (4) eine erste Trägerschiene (42) zum Tragen der Kunststoffvorformlinge (10) und eine zweite Trägerschiene (44) zum Tragen der Kunststoffvorformlinge (10) aufweist und die Kunststoffvorformlinge (10) zwischen dieser ersten Trägerschiene (42) und dieser zweiten Trägerschiene (44) transportiert werden, wobei sich diese Trägerschienen (42, 44) entlang der Transportrichtung erstrecken, wobei die Sortiereinrichtung zwei zueinander beanstandete Rollen (22, 26) aufweist, zwischen denen die Kunststoffvorformlinge (10) transportiert werden.
wobei
die Vorrichtung (1) einen Verstellmechanismus (8) zum Verstellen zumindest eines seitlichen Abstandes dieser Trägerschienen (42, 44) aufweist **dadurch gekennzeichnet, dass** dieser Verstellmechanismus mehrere Verstelleinheiten (82, 84, 86) aufweist, welche entlang der Transportrichtung hintereinander angeordnet sind, wobei diese Verstelleinheiten (82, 84, 86) jeweils eine Verstellung des seitlichen Abstandes ermöglichen und wobei diese Verstelleinheiten (82, 84, 86) miteinander mechanisch derart gekoppelt werden, dass die Verstelleinheiten (82, 84, 86) gemeinsam verstellbar sind.

## Claims

1. Apparatus (1) for transporting plastic preforms, having a sorting device (2) which is suitable and intended for sorting plastic preforms and which transports the plastic preforms (10) in a predetermined transport direction, and having a transport device (4) arranged after the sorting device (2) in the transport direction, wherein said transport device (4) comprises a first support rail (42) for carrying the plastic preforms (10) and a second support rail (44) for carrying the plastic preforms (10), and the plastic preforms (10) are transportable between said first support rail (42) and said second support rail (44), wherein said support rails (42, 44) extending in transport direction, wherein the sorting device having two rollers (22, 26) which are spaced apart from one another and between which the plastic preforms (10) can be guided,
wherein the apparatus (1) has an adjustment mechanism (8) for adjusting at least one lateral spacing of these carrier rails (42, 44),
**characterised in that**
this adjustment mechanism comprising several adjustment units (82, 84, 86), which are arranged one behind the other along the transport direction, wherein these adjustment units (82, 84, 86) each enable adjustment of the lateral spacing and wherein these adjustment units (82, 84, 86) are mechanically coupled to one another in such a way that the adjustment units (82, 84, 86) can be adjusted together.

2. Apparatus (1) according to claim 1,
**characterised in that**
the adjusment units (82, 84, 86) are coupled to each other by means of at least one mechanical coupling device.

3. Apparatus (1) according to the previous claim,
**characterised in that**
the coupling device (12) comprises at least one rod-like body which is rotatable and/or displaceable along its longitudinal direction.

4. Apparatus (1) according to at least one of the preceding claims, **characterised in that**
the apparatus has a drive device for driving the adjustment units.

5. Apparatus (1) according to at least one of the preceding claims, **characterised in that**
the transport device (4) has a downholder element (46) which extends at least in sections along the transport direction (T) and which is preferably also adjustable by the adjustment mechanism.

6. Apparatus (1) according to at least one of the preceding claims, **characterised in that**
the transport device (4) has guide elements (47, 48) for guiding the preform bodies.

7. Apparatus (1) according to the previous claim,
**characterised in that**
the guide elements (47, 48) are also adjustable by the adjustment mechanism.

8. Apparatus (1) according to at least one of the preceding claims, **characterised in that**
a distance between the two rollers (22, 24) of the sorting device is also adjustable.

9. Apparatus (1) according to at least one of the preceding claims, **characterised in that**
the support rails (42, 44), the guide elements (47, 48) and the downholder element (46) are individually adjustable.

10. Method for transporting plastic preforms, wherein the plastic preforms being sorted by a sorting device (2) and transported by a transport device (4) arranged downstream of the sorting device (2) in the transport direction, wherein said transport device (4) comprises a first support rail (42) for carrying the plastic preforms (10) and a second support rail (44) for carrying the plastic preforms (10), and the plastic preforms (10) are transported between said first support rail (42) and said second support rail (44), wherein said support rails (42, 44) extending along the transport direction, wherein the sorting device comprises two rollers (22, 26) spaced from each other between which the plastic preforms (10) are transported,
wherein the apparatus (1) comprises an adjustmest mechanism (8) for adjusting at least one lateral spacing of these support rails (42, 44), **characterised in that**
this adjustment mechanism comprises several adjustment units (82, 84, 86) which are arranged one behind the other along the transport direction, wherein these adjustment units (82, 84, 86) each enable an adjustment of the lateral spacing and wherein these adjustment units (82, 84, 86) are mechanically coupled to one another in such a way that the adjustment units (82, 84, 86) can be adjusted together.

## Revendications

1. Dispositif (1) pour transporter des préformes en matière plastique avec un système de tri (2), lequel est adapté pour et se destine à trier des préformes en matière plastique et lequel transporte les préformes en matière plastique (10) dans une direction de transport prédéfinie, et avec un système de transport (4) disposé après le système de tri (2) dans la direction de transport, dans lequel ledit système de transport (4) présente un premier rail de support (42) pour supporter les préformes en matière plastique (10) et un deuxième rail de support (44) pour supporter les préformes en matière plastique (10) et les préformes en matière plastique (10) peuvent être transportées entre ledit premier rail de support (42) et ledit deuxième rail de support (44), dans lequel lesdits rails de support (42, 44) s'étendent le long de la direction de transport, dans lequel le système de tri présente deux rouleaux (22, 26) espacés l'un par rapport à l'autre, entre lesquels les préformes en matière plastique (10) peuvent être guidées,
dans lequel le dispositif (1) présente un mécanisme d'ajustement (8) pour ajuster au moins un premier espacement latéral entre lesdits rails de support (42, 44),
**caractérisé en ce que**
ledit mécanisme d'ajustement présente plusieurs unités d'ajustement (82, 84, 86), lesquelles sont disposées les unes derrière les autres le long de la direction de transport, dans lequel lesdites unités d'ajustement (82, 84, 86) permettent respectivement un ajustement de l'espacement latéral et dans lequel lesdites unités d'ajustement (82, 84, 86) sont couplées mécaniquement entre elles de telle manière que les unités d'ajustement (82, 84, 86) peuvent être ajustées conjointement.

2. Dispositif (1) selon la revendication 1,
**caractérisé en ce que**
les unités d'ajustement (82, 84, 86) sont couplées entre elles au moyen d'au moins un système de couplage mécanique.

3. Dispositif (1) selon la revendication précédente,
**caractérisé en ce que**
le système de couplage (12) présente au moins un corps de type tige pouvant tourner et/ou pouvant être coulissé le long de sa direction longitudinale.

4. Dispositif (1) selon au moins l'une quelconque des revendications précédentes,
**caractérisé en ce que**
le dispositif présente un système d'entraînement pour entraîner les unités d'ajustement.

5. Dispositif (1) selon au moins l'une quelconque des revendications précédentes,
**caractérisé en ce que**
le système de transport (4) présente un élément serre-flan (46), lequel s'étend au moins par endroits le long de la direction de transport (T) et lequel peut être ajusté de manière préférée également par le mécanisme d'ajustement.

6. Dispositif (1) selon au moins l'une quelconque des revendications précédentes,
**caractérisé en ce que**
le système de transport (4) présente des éléments de guidage (47, 48) pour guider les corps préformés.

7. Dispositif (1) selon la revendication précédente,
**caractérisé en ce que**
les éléments de guidage (47, 48) peuvent être ajustés également par le mécanisme d'ajustement.

8. Dispositif (1) selon au moins l'une quelconque des revendications précédentes,
**caractérisé en ce que**
un espacement entre les deux rouleaux (22, 24) du système de tri peut être ajusté également.

9. Dispositif (1) selon au moins l'une quelconque des revendications précédentes,
**caractérisé en ce que**
les rails de support (42, 44), les éléments de guidage (47, 48) et l'élément serre-flan (46) peuvent être ajustés individuellement.

10. Procédé pour transporter des préformes en matière plastique, dans lequel les préformes en matière plastique sont triées avec un système de tri (2) et sont transportées avec un système de transport (4) disposé après le système de tri (2) dans la direction de transport, dans lequel ledit système de transport (4) présente un premier rail de support (42) pour supporter les préformes en matière plastique (10) et un deuxième rail de support (44) pour supporter les préformes en matière plastique (10) et les préformes en matière plastique (10) sont transportées entre ledit premier rail de support (42) et ledit deuxième rail de support (44), dans lequel lesdits rails de support (42, 44) s'étendent le long de la direction de transport, dans lequel le système de tri présente deux rouleaux (22, 26) espacés l'un par rapport à l'autre, entre lesquels les préformes en matière plastique (10) sont transportées,
dans lequel le dispositif (1) présente un mécanisme d'ajustement (8) pour ajuster au moins un espacement latéral desdits rails de support (42, 44),
**caractérisé en ce que**
ledit mécanisme d'ajustement présente plusieurs unités d'ajustement (82, 84, 86), lesquelles sont disposées les unes derrière les autres le long de la direction de transport, dans lequel lesdites unités d'ajustement (82, 84, 86) permettent respectivement un ajustement de l'espacement latéral et dans lequel lesdites unités d'ajustement (82, 84, 86) sont couplées mécaniquement entre elles de telle manière que les unités d'ajustement (82, 84, 86) peuvent être ajustées conjointement.
